# EUROPEAN PATENT SPECIFICATION

(11) **EP 3 824 170 B1**
(45) Date of publication and mention of the grant of the patent: **17.06.2026**
(21) Application number: 19838402.6
(22) Date of filing: 16.07.2019
(51) Int. Cl.: F02B 75/32, F02B 75/04, F16J 1/12, F16J 1/14, F01B 9/02

(54) **RECIPROCATING-PISTON ASSEMBLY, INTERNAL COMBUSTION ENGINE, AND RELATED METHODS**
HUBKOLBENANORDNUNG, VERBRENNUNGSMOTOR UND ZUGEHÖRIGE VERFAHREN
ENSEMBLE PISTON À VA-ET-VIENT, MOTEUR À COMBUSTION INTERNE ET PROCÉDÉS ASSOCIÉS

(30) Priority: 17.07.2018 US 201862699113 P; 07.06.2019 US 201962858744 P
(43) Date of publication of application: 26.05.2021
(73) Proprietor: Transcend Energy Group, LLC, Sandpoint, Idaho (ID) 83864 (US)
(72) Inventor: WOODWARD, Jon, Mapleton, Utah 84664 (US)
(74) Representative: Forresters IP LLP
(86) International application number: PCT/US2019/042053
(87) International publication number: WO 2020/018573

(56) References cited:
- EP-A1- 1 165 976
- EP-B1- 1 165 976
- JP-A- 2010 071 122
- KR-B1- 100 412 555
- KR-B1- 100 412 555
- US-A- 4 089 235
- US-A- 4 567 866
- US-A- 4 567 866
- US-A1- 2010 282 206
- US-B1- 6 412 393
- US-B2- 8 220 434

## Description

### TECHNICAL FIELD

The present invention relates to an internal combustion engine and, more specifically, to a piston assembly for use in an engine and for connecting a piston head to a crankshaft of the engine.

### BACKGROUND

A conventional internal combustion engine of the type found in most vehicles today includes a plurality of pistons that are respectively movably mounted in a plurality of cylinders formed in an engine block. Each of the pistons is connected to a piston rod at a first end of the piston rod, and the piston rod is coupled to a crankshaft at a second end of the piston rod. Furthermore, when spark plugs within the engine block fire to ignite a fuel mixture, the pistons are driven downward to turn the crankshaft, which ultimately drives the entire vehicle. In a typical engine, a single connecting rod is used and connected with a respective first end to the corresponding piston and a respective second end to a corresponding portion of the crankshaft. The connecting points between the two ends of each connecting rod and the corresponding piston and corresponding crankshaft are disposed at the ends of the longitudinal center axis of the respective connecting rod.

U.S. Patent Application Publication No. 2010/0282206 A1, filed on November 11, 2010 is directed to an engine including a two part connecting rod. The lateral component of the force on a piston traveling axially in a cylinder is taken up by a slider coupled between an upper portion of the connecting rod and the engine.

### SUMMARY

According to the present invention in a first aspect, there is provided a piston assembly as recited by Claim 1.

According to the present invention in a further aspect, there is provided an engine as recited by Claim 9.

According to the present invention in a yet further aspect, there is provided a method of forming a piston assembly as recited by Claim 13.

Embodiments of the present invention provide various advantages over the prior art. By virtue of the one or more support flanges extending between the upper rod and an interior portion of the piston skirt, the upper rod is substantially prevented from rotating relative to the piston head. Rocking friction on the piston skirt against the inner wall of the piston chamber is effectively reduced, whilst motion of the upper rod is not fully restricted. Further advantages will be appreciated from the detailed description below.

### BRIEF DESCRIPTION OF THE DRAWINGS

For a detailed understanding of the present invention, reference should be made to the following detailed description, taken in conjunction with the accompanying drawings, in which like elements have generally been designated with like numerals, and wherein:
FIG. 1 is a schematic depiction of a piston assembly within an engine according to one or more arrangements not forming embodiments of the present invention;
FIGS. 2A and 2B show various views of the piston assembly of FIG. 1;
FIG. 3 is another side view of the piston assembly within an engine according to one or more arrangements not forming embodiments of the present invention;
FIG. 4 is a perspective view of an upper rod of a piston assembly according to one or more arrangements not forming embodiments of the present invention;
FIG. 5 is a side view of the upper rod of FIG. 4;
FIG. 6 is a side view of a gudgeon pin of the piston assembly according to one or more arrangements not forming embodiments of the present invention;
FIG. 7 is a side and front view of a connector pin according to one or more arrangements not forming embodiments of the present invention;
FIG. 8 is a perspective view of an upper rod, gudgeon pin assembly, and lower rod of the piston assembly according to one or more arrangements not forming embodiments of the present invention;
FIG. 9 is a side view of a lower rod of the piston assembly according to one or more arrangements not forming embodiments of the present invention;
FIG. 10A is a perspective view of a piston head and upper rod of the piston assembly according to one or more arrangements not forming embodiments of the present invention;
FIG. 10B is a bottom view of the piston head of FIG. 10A;
FIGS. 11-13 include various views of the piston assembly and crankshaft according to one or more arrangements not forming embodiments of the present invention; and
FIGS. 14-16 in various additional drawings of the upper rod, lower rod, and piston head of the piston assembly according to one or more arrangements not forming embodiments of the present invention;
FIGS 17A-17D show various views of a piston head of a piston assembly according to one or more arrangements not forming embodiments of the present invention;
FIGS. 18A and 18B show various views of a lower rod of a piston assembly in an exploded configuration according to one or more arrangements not forming embodiments of the present invention;
FIGS. 19A and 19B show various views of an upper portion of the lower rod of FIGS. 18A and 18B according to one or more arrangements not forming embodiments of the present invention;
FIGS. 20A-20D show various additional views of the upper portion of the lower rod of FIGS. 18A and 18B according to one or more arrangements not forming embodiments of the present invention;
FIGS. 21A-21F show various views of a lower portion of the lower rod of FIGS. 18A and 18B according to one or more arrangements not forming embodiments of the present invention;
FIGS. 22A-22E show various views of an upper rod of a piston assembly according to one or more arrangements not forming embodiments of the present invention;
FIGS. 23A and 23B show various views of alignments sleeves of a lower rod according to one or more arrangements not forming embodiments of the present invention; and
FIG. 24 shows a view of a piston assembly according to one or more embodiments of the present invention.

### MODE(S) FOR CARRYING OUT THE INVENTION

The illustrations presented herein are not actual views of any internal combustion engine system, piston assembly, or any component thereof, but are merely idealized representations, which are employed to describe embodiments of the present invention.

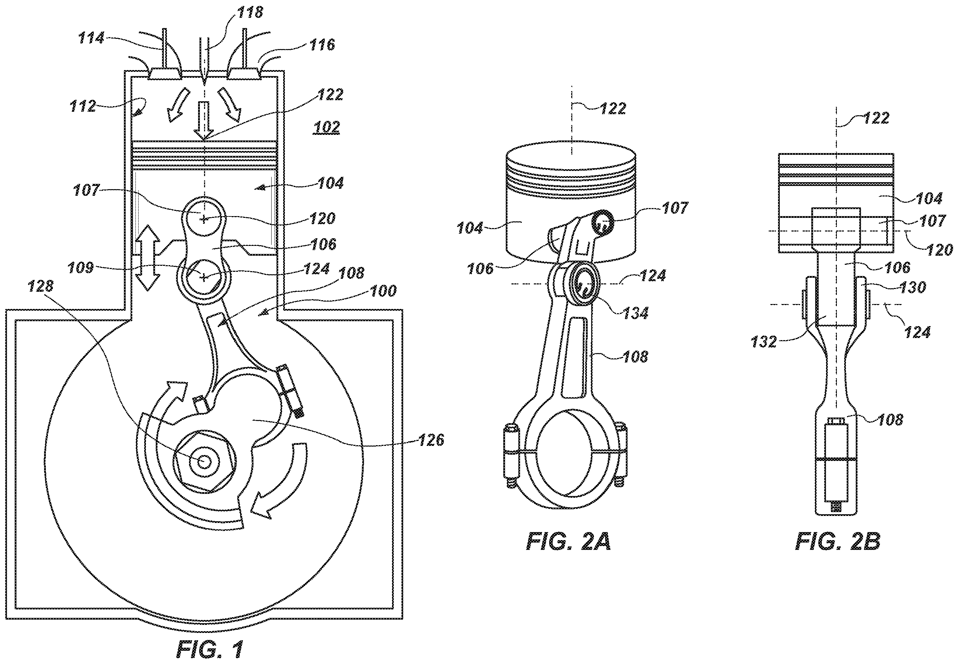

FIG. 1 shows a schematic representation of a piston assembly 100, which does not form an embodiment of the present invention, disposed within an engine 102. FIGS. 2A and 2B include a schematic perspective view and a schematic side view of the piston assembly 100 of FIG. 1. Referring to FIGS. 1-2B together, this piston assembly 100 may include a piston head 104, an upper rod 106, a gudgeon pin assembly 107 (e.g., two or more pin locks, a needle sleeve bearing, and gudgeon pin (e.g., wrist pin)), a lower rod 108, and a connector pin assembly 109. The corresponding engine 102 may include a cylinder 112, one or more valves 114 and ports 116 (e.g., an intake valve and port and exhaust valve and port), and a fuel injector 118. The one or more valves 114 and ports 116 of the engine 102 may be oriented in conventional manners.

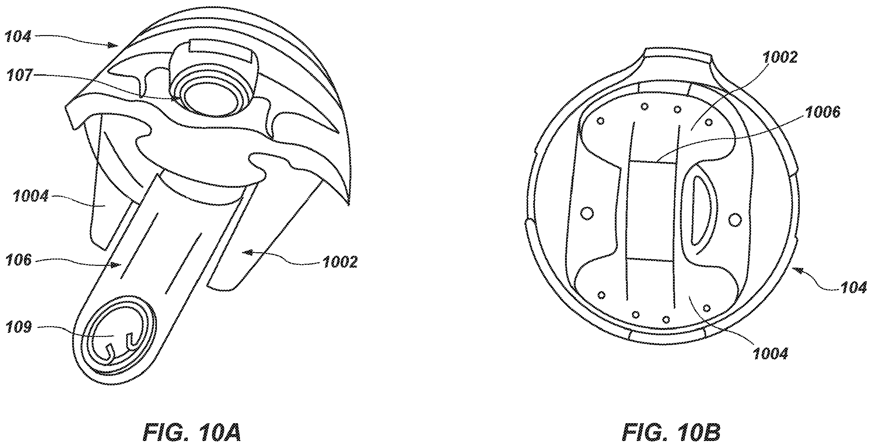

The piston head 104 of this piston assembly 100 may be disposed within the cylinder 112 of the engine 102 and may be configured to reciprocate back and forth (e.g., up and down as depicted in FIG. 1) during use. The upper rod 106 may be coupled to the piston head 104 via the gudgeon pin assembly 107 at a first longitudinal end of the upper rod 106 and may be coupled to the lower rod 108 at a second opposite longitudinal end of the upper rod 106. In some arrangements, of this assembly, the upper rod 106 may be coupled to the piston head 104 proximate or at a centroid of the piston head 104. In one or more arrangements, of this assembly, the upper rod 106 may be coupled to the piston head 104 at a point that is centered between an upper surface and lower surface of the piston head 104 and intersecting a center longitudinal axis 122 of the piston head 104. In one or more arrangements, of this assembly, a longitudinal axis 120 of the gudgeon pin assembly 107 may extend in a direction perpendicular to the longitudinal axis 122 of the piston head 104 and may intersect the longitudinal axis 122 of the piston head 104. The upper rod 106 may be fixed relative to the piston head 104. For instance, the upper rod 106 may not rotate and/or translate relative to the piston head 104 during use. The upper rod 106, of this assembly, is described in greater detail below in regard to FIGS. 10A and 10B.

This upper rod 106 may extend in an axial direction (e.g., in a direction parallel to the longitudinal axis 122 of the piston head 104) from the piston head 104 to a region below the piston head 104 (e.g., below the piston head 104 as depicted in FIGS. 1-2B). For instance, a longitudinal length of the upper rod 106 may be greater than a distance from a point at which the upper rod 106 is coupled to the piston head 104 to a lowermost surface of the piston head 104. Furthermore, the longitudinal axis of the upper rod 106 may be parallel to the longitudinal axis 122 of the piston head 104. In view of the foregoing, a lower longitudinal end of the upper rod 106 may be oriented beneath the piston head 104 when the upper rod 106 is coupled to the piston head 104.

As noted above, this upper rod 106 may be coupled to the lower rod 108 on a longitudinal end opposite the piston head 104 (i.e., the lower longitudinal end of the upper rod 106). In some arrangements, of this assembly, the upper rod 106 may be coupled to the lower rod 108 via the connector pin assembly 109. In one or more arrangements, the connector pin assembly 109 may include any gudgeon and/or wrist pin and associated assembly known in the art. Referring to FIG. 2B, in some arrangements, the lower rod 108 may include a forked portion 130, and the upper rod 106 may include a connector portion 132 sized and shaped to fit within the forked portion 130 of the lower rod 108. The connector pin assembly 109 may extend through the forked portion 130 of the lower rod 108 and the connector portion 132 of the upper rod 106. Referring to FIGS. 1-2B together again, in some arrangements, a longitudinal axis 124 of the connector pin assembly 109 may be parallel to the longitudinal axis 120 of the gudgeon pin assembly 107 and may intersect the longitudinal axis 122 of the piston head 104. In alternative arrangements, the longitudinal axis 124 of the connector pin assembly 109 may be perpendicular to the longitudinal axis 120 of the gudgeon pin assembly 107.

The lower rod 108 may be rotatable relative to the upper rod 106. For instance, the lower rod 108 may be configured to pivot about the connector pin assembly 109 and the upper rod 106. For example, the connector pin assembly 109 may provide a bearing about which the lower rod 108 may pivot as the piston assembly 100 cycles through strokes (described below). In some arrangements, a ratio of a longitudinal length (i.e., center-to-center length) of the upper rod 106 and a longitudinal length (i.e., center-to-center length) of the lower rod 108 may be within a range of about 0.25 and about 0.65. For instance, a ratio of a longitudinal length of the upper rod 106 and a longitudinal length of the lower rod 108 may be within a range of about 0.33 and about 0.57. For example, a ratio of a longitudinal length of the upper rod 106 and a longitudinal length of the lower rod 108 may be about 0.457.

Additionally, in some arrangements, a ratio of a longitudinal length (i.e., center-to-center length) of the upper rod 106 and a distance from a connection point of the upper rod 106 to the piston head 104 (i.e., the center longitudinal axis of the gudgeon pin assembly 107) to a center longitudinal axis 128 of the crankshaft 126 when the piston head 104 is at bottom dead center may be within a range of about 0.45 and about 0.85. For instance, a ratio of a longitudinal length of the upper rod 106 and a distance from a connection point of the upper rod 106 to the piston head 104 to a center longitudinal axis 128 of the crankshaft 126 when the piston head 104 is at bottom dead center may be within a range of about 0.60 and about 0.75. For example, a ratio of a longitudinal length of the upper rod 106 and a distance from a connection point of the upper rod 106 to the piston head 104 to a center longitudinal axis 128 of the crankshaft 126 when the piston head 104 is at bottom dead center may be about 0.68.

The lower rod 108 may be coupled to a crankshaft 126 at a longitudinal end of the lower rod 108 opposite the upper rod 106. The crankshaft 126 may include a conventional crankshaft. For instance, the crankshaft 126 may translate reciprocating motion of the piston head 104 into rotational motion. As is known in the art, a crankshaft includes multiple "crank throws" or "crankpins" and multiple bearing surfaces (e.g., rod journals, connecting rod journals, *etc.)* having axes offset from the center longitudinal axis 128 of the crankshaft 126. The lower rod 108 may be coupled to a respective bearing surface of the crankshaft 126. Additionally, the lower rod 108 may be coupled to the crankshaft 126 via any conventional bearings. Furthermore, as will be appreciated by one of ordinary skill in the art, an axis of rotation 128 (i.e., center longitudinal axis) of the crankshaft 126 may be parallel to the longitudinal axis 124 of the connector pin assembly 109.

For purposes of describing the operation of the piston assembly 100, hour positions of a typical clock face are referred to herein (e.g., 12 o'clock, 3 o'clock, etc.) as positions of the lower longitudinal end of the lower rod 108 about the axis of rotation 128 of the crankshaft 126. For example, the foregoing positions may refer to a center point of the lower longitudinal end of the lower rod 108 and its position relative to the axis of rotation 128 of the crankshaft 126 as depicted in FIG. 1, wherein the piston head 104 associated with the lower rod 108 is at top dead center in the 12 o'clock position and at bottom dead center at the 6 o'clock position regardless of an orientation of the associated engine and/or cylinder.

As is described in further detail below, the upper rod 106 of the piston assembly 100 provides a lower connection point for the lower rod 108 to connect to the piston head 104 in comparison to conventional connector rods know in the art. In particular, the upper rod 106 enables the lower rod 108 to pivot about a point that is lower relative to the piston head 104 than typical points about which conventional connector rods pivot. By having a lower point of connection (i.e., a lower pivot point), the lower rod 108 may be shorter than conventional connector rods and may reduce a lever length of the lower rod 108. As a result, less force may be required to move the piston head 104 from the 12 o'clock position to the 6 o'clock position and/or to initiate movement of the piston head 104 from the 12 o'clock position; additionally, less force may be required to move the piston head 104 from the 6 o'clock position to the 12 o'clock position and/or to initiate movement of the piston head 104 from the 6 o'clock position. In other words, the orientation of the crankshaft 126 relative to the connection point of the lower rod 108 may provide the crankshaft 126 with better leverage (i.e., a higher amount mechanical advantage) over a translation of the piston head 104 within the cylinder 112 of the engine 102 in comparison to conventional piston assemblies.

By reducing the force required to move the piston assembly 100 from 12 o'clock position to the 6 o'clock position and the 6 o'clock position to the 12 o'clock position, the piston assembly 100 may reduce a tendency of the piston assembly 100 to remain at the 12 o'clock and 6 o'clock positions. For instance, reducing the force required to move the piston assembly 100 from 12 o'clock position to the 6 o'clock position and from the 6 o'clock position to the 12 o'clock position may reduce a tendency of the piston assembly 100 to remain in a top dead center position or at a bottom dead center position. In some arrangements, the crankshaft 126 may experience an at least substantially consistent resistance to rotation throughout a full rotation of the crankshaft 126 unlike conventional piston assemblies, which have increased resistance at least around the 12 o'clock and 6 o'clock positions. In particular, during rotation, the crankshaft 126 may not experience peaks in resistance to rotation due to the piston assembly 100 unlike peaks experienced by crankshafts utilizing conventional piston assemblies.

In some arrangements, the engine 102 and piston assembly 100 may include a four-stroke engine. For instance, during use, the piston assembly 100 may complete four separate strokes while turning the crankshaft 126. In other words, the engine 102 and piston assembly 100 may cycle through a typical four-stroke cycle.

The piston assembly 100 may begin a four-stroke cycle with an intake stroke (e.g., an induction or suction stroke). The intake stroke begins with the piston head 104 positioned at top dead center and ends with the piston head 104 positioned at bottom dead center, as is known in the art. During the intake stroke, an intake valve (e.g., valve 114) opens (due to a distributor cam lobe of a distributor cam, as is known in the art), and as the piston head 104 moves downward within the cylinder 112, the piston head 104 pulls air mixture into the cylinder 112 by generating a vacuum pressure within the cylinder 112 via the piston head's 104 downward motion. Additionally, the fuel injector 118 injects fuel into the air to form an air-fuel mixture. As noted above, the piston assembly 100 may reduce a force required to move the piston head 104 from the 12 o'clock position to the 6 o'clock position, and as a result, a portion of the energy required to perform the intake stroke may be saved (e.g., energy from other piston assemblies rotating the crankshaft 126 during power (i.e., combustion) strokes of the other piston assemblies). Reducing an amount of energy required to perform intake strokes will result in more energy being available for other operations of the engine 102 (e.g., operating a vehicle with the engine 102). Accordingly, the piston assembly 100 may provide a more efficient engine in comparison to conventional piston assemblies.

Subsequent to the intake stroke, the piston assembly 100 commences a compression stroke. The compression stroke begins with the piston head 104 positioned at bottom dead center and ends with the piston head 104 positioned at top dead center. During the compression stroke, the piston head 104 compresses the air-fuel mixture in preparation for ignition during the power stroke (described below). Furthermore, during the compression stroke, the intake and exhaust valves (e.g., valves 114) are closed. As described above, the piston assembly 100 reduces a force required to move the piston head 104 from the 6 o'clock position to the 12 o'clock position, and as a result, a portion of the energy required during the compression stroke may be saved. Reducing an amount of energy required to perform compression strokes will result in more energy being available for other operations of the engine 102.

Upon compressing the air-fuel mixture and arriving at top dead center, the piston assembly 100 may commence the power (i.e., combustion or ignition) stroke. When the piston head 104 is proximate to top dead center, the air-fuel mixture is ignited by an initiator (e.g., spark plug, glow plug, *etc.)* or heat generated by high compression (e.g., diesel engines). Igniting the air-fuel mixture causes an explosion that forcibly causes the piston head 104 to return to bottom dead center. As is known in the art, the power stroke produces mechanical work from the engine 102 to rotate the crankshaft 126. For instance, the power stroke may produce mechanical work via conventional methods involving piston assemblies and crankshafts.

As described above, the piston assembly 100 reduces a force required to move the piston head 104 from the 6 o'clock position or from the 12 o'clock position. As a result, this piston assembly enables the air-fuel mixture to be ignited closer to or at the 12 o'clock position in comparison to conventional piston assemblies. For instance, conventional piston assemblies typically have ignition positions between the 10 o'clock and 12 o'clock positions in order to provide the necessary force to rotate through the 12 o'clock position. Furthermore, having the air-fuel mixture be ignited closer to or at the 12 o'clock position (and not significantly earlier) allows for greater dwell time (e.g., a greater dwell angle (i.e., a greater length of time--expressed in distributor cam rotational degrees--that breakers are closed and the initiator is being charged with electricity) of the distributor cam rotation. By increasing a dwell time, the piston assembly 100 may reduce abruptness of the cam lobes of a distributor cam and may enable intake valves and exhaust valves (e.g., valves 114) to be open longer during intake and exhaust strokes of the piston assembly 100.

Moreover, having the air-fuel mixture be ignited closer to or at the 12 o'clock position (and not significantly earlier) may reduce an amount of engine knock (i.e., a hammer effect) exhibited by engines implementing the piston assembly 100 in comparison to conventional engines. Reducing engine knock may increase an overall efficiency of the engines implementing the piston assembly 100 and may lead to increased overall power while maintaining cylinder size and piston number. Additionally, in some arrangements, the piston assembly 100 may dissipate heat more efficiently from the 3 o'clock position to the 6 o'clock position during the power stroke. For instance, in some arrangements, in comparison to conventional piston assemblies, the crankshaft may be rotated by the piston assembly 100 past the 3:00 pm position (and/or the 6:00 pm position) more quickly than conventional piston assemblies. Accordingly, heat generated by burning the air-fuel mixture has less time to be absorbed by the cylinder and engine block. A result, more of the heat is expelled through the exhaust valve 114 and exhaust port 116 during the exhaust stroke (described below). In some arrangements, dissipating heat more efficiently may lead to reduced nitrogen oxide emissions.

Upon reaching bottom dead center, the piston assembly 100 initiates an exhaust stroke. During the exhaust stroke, the piston head 104 of the piston assembly 100 once again returns from bottom dead center to top dead center while an exhaust valve (e.g., valve 114) is open. The action of the piston head 104 moving from bottom dead center to top dead center expels spent air-fuel mixture past the exhaust valve 114 and through an exhaust port 116. Furthermore, upon reaching top dead center, the piston assembly 100 may repeat the above-described four strokes.

In view of the foregoing, because the piston assembly 100 reduces rotation resistance experienced by the crankshaft 126, more energy from the power strokes of the piston assemblies 100 of the engine 102 can be maintained (e.g., carried) through the 12 o'clock and 6 o'clock positions, thus, reducing required energy for performing subsequent strokes. Accordingly, the piston assembly 100 may provide a more efficient engine.

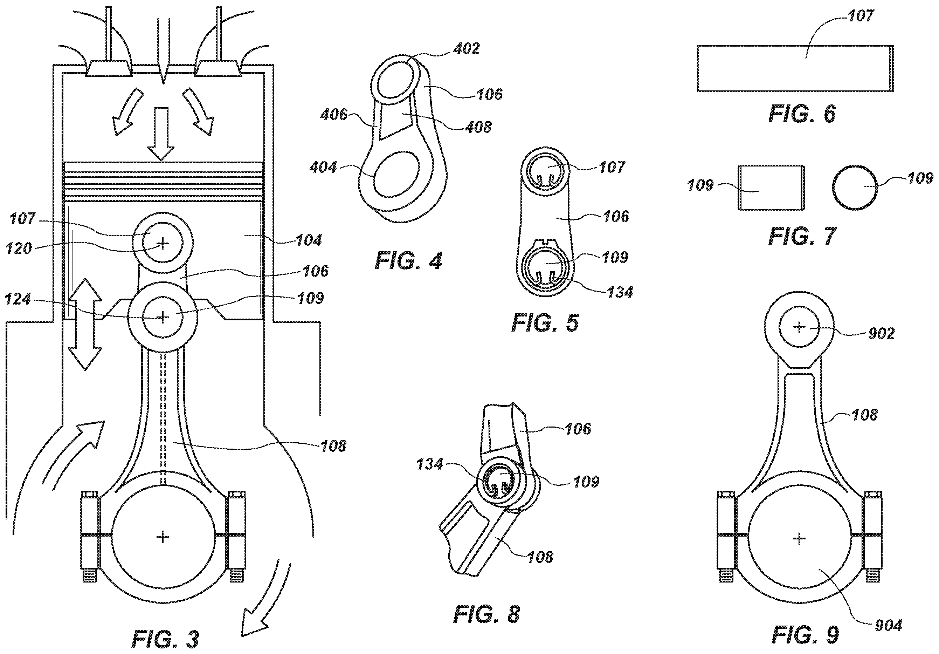

FIG. 3 is another schematic side view of a piston assembly 100, which does not form an embodiment of the present invention, disposed within a cylinder 112 of an engine 102. The crankshaft 126 is removed in FIG. 3 to better show components of the piston assembly 100. The lower rod 108 may be coupled to the upper rod 106 through the connector pin assembly 109. The connector pin assembly 109 may be configured to enable the lower rod 108 to pivot relative to the upper rod 106 about the longitudinal axis 124 of the connector pin assembly 109. The upper rod 106 may be coupled to the piston head 104 through the gudgeon pin assembly 107. The upper rod 106 may be configured to transmit motion of the crankshaft 126 input into the lower rod 108 to the piston head 104 such that rotation of the crankshaft 126 results in a linear motion of the piston head 104 along the longitudinal axis 122 of the piston head 104. The upper rod 106 and lower rod 108 may substantially align with the longitudinal axis 122 of the piston head 104, as illustrated in FIG. 3, when the piston assembly 100 is in the top dead center position and/or the bottom dead center position (e.g., the 12 O'clock and 6 o'clock positions) before a direction of the piston head 104 is reversed.

FIG. 4 is a perspective view of the upper rod 106 according to one or more further arrangements not forming embodiments of the present invention. The upper rod 106 may include an upper aperture 402 and a lower aperture 404 formed in the ends of the upper rod 106. The upper aperture 402 may be sized and shaped to receive the gudgeon pin assembly 107. In some arrangements, the gudgeon pin assembly 107 may be coupled to the upper rod 106 through an interference fit *(e.g.,* mechanical interference, press fit, *etc.).* For example, the upper aperture 402 may be substantially circular having a diameter substantially similar to or even slightly smaller than the gudgeon pin assembly 107. In some arrangements, the upper aperture 402 may have a diameter slightly larger than the gudgeon pin assembly 107 and may be configured to enable the gudgeon pin assembly 107 to rotate relative to the upper rod 106 and/or provide lubrication to the gudgeon pin assembly 107. For example, the upper aperture 402 may have a diameter between about .0002 in. (5.1 µm) and about .0030 in. (76.2 µm) greater than a corresponding diameter of the gudgeon pin assembly 107, such as between about .0005 in. (12.7 µm) and about .0025 in. (63.5 µm) greater, or between about .0008 in. (20.3 µm) and about .0022 in (55.9 µm) greater than the diameter of the gudgeon pin assembly 107.

The lower aperture 404, in this example, may be configured to receive the connector pin assembly 109. In some arrangements, the connector pin assembly 109 may be coupled to the upper rod 106 through an interference fit. For example, the lower aperture 404 may be substantially circular having a diameter substantially similar to or even slightly smaller than the connector pin assembly 109. In some arrangements, the lower aperture 404 may slightly larger than the connector pin assembly 109 and be configured to enable the connector pin assembly 109 to rotate relative to the upper rod 106 and/or provide lubrication to the connector pin assembly 109. For example, the lower aperture 404 may have a diameter between about .0002 in. (5.1 µm) and about .0030 in. (76.2 µm) greater than a corresponding diameter of the connector pin assembly 109, such as between about .0005 in. (12.7 µm) and about .0025 in. (63.5 µm) greater, or between about .0008 in. (20.3 µm) and about .0022 in (55.9 µm) greater than the diameter of the connector pin assembly 109.

In some arrangements, the upper rod 106 may include ridges 406 defining one or more recesses 408 in the upper rod 106 between the upper aperture 402 and the lower aperture 404. The ridges 406 may be configured to substantially prevent the upper rod 106 from deforming under the loads transmitted to and from the piston head 104 through the upper rod 106. For instance, the ridge 406 may be sized and shaped to add structural integrity to the upper rod 106. The one or more recesses 408 defined by the ridges 406 may enable the upper rod 106 to be formed using less material that may reduce a mass of the upper rod 106, which may result in a reduction of mass for the piston assembly 100 and the rotating mass of the associated engine 102.

FIG. 5 is a side view of the upper rod 106 of FIG. 4. The gudgeon pin assembly 107 may be received in the upper aperture 402. In some such arrangements, the gudgeon pin assembly may be secured to the upper rod 106 with a pin lock 134. In some arrangements, the pin lock 134 may be positioned in the piston head 104 (FIG. 3) at opposite ends of the gudgeon pin assembly 107 sandwiching the gudgeon pin assembly 107 between the pin locks 134. The pin lock 134 may include a snap ring *(e.g.,* CIRCLIPS^{®}, C-clips, E-clips, *etc.*), a wire clip, spiral locks *(e.g.,* spirolocks, *etc.),* a pin button, a set screw, a cinch-bolt, roll pin, *etc.*

The connector pin assembly 109 may be received in the lower aperture 404. In some arrangements, the connector pin assembly 109 may be secured to the upper rod 106 with a pin lock 134. In some arrangements, the pin lock 134 may be positioned in the lower rod 108 (FIG. 3) at opposite ends of the connector pin assembly 109 sandwiching the connector pin assembly 109 between the pin locks 134. In some arrangements, the connector pin assembly 109 may extend beyond an outer surface of the joint between the lower rod 108 and the upper rod 106 and the pin locks 134 may be located on the connector pin assembly 109 at opposing ends of the connector pin assembly sandwiching the upper rod 106 and the lower rod 106 between the pin locks 134. The pin lock 134 may include a snap ring *(e.g.,* CIRCLIPS^{®}, C-clips, E-clips, *etc.),* a wire clip, spiral, a pin button, a set screw, a cinch-bolt, roll pin, *etc.*

FIG. 6 is a side view of the gudgeon pin of a gudgeon pin assembly107 according to one or more arrangements not forming embodiments of the present invention. Referring to FIGS. 4-6 together, the gudgeon pin assembly 107 may here be configured to extend through the upper aperture 402 of the upper rod 106 and into the piston head 104. The gudgeon pin assembly 107 may secure the upper rod 106 to the piston head 104. In some such arrangements, the gudgeon pin assembly 107 may be configured in a semi-floating configuration wherein the gudgeon pin assembly 107 enables the piston head 104 to rotate relative to the gudgeon pin assembly 107 and is rotationally secured to the upper rod 106. For example, the gudgeon pin assembly 107 may have an interference fit in the upper aperture 402 of the upper rod 106. In some arrangements, the gudgeon pin assembly 107 may be configured in a full-floating configuration wherein the gudgeon pin assembly 107 is configured to enable the upper rod 106 and the piston head 104 to rotate relative to the gudgeon pin assembly 107. The gudgeon pin assembly 107 may have a length sufficient to extend into the piston head 104 on opposite sides of the upper rod 106.

FIG. 7A is a side view of connector pin of a connector pin assembly 109 and FIG. 7B is an end view of the connector pin assembly 109 according to one or more arrangements not forming embodiments of the present invention. Referring to FIGS. 4-7B together, the connector pin assembly 109 may be configured to extend through the lower aperture 404 of the upper rod 106 and into the lower rod 108. The connector pin assembly 109 may secure the upper rod 106 to the lower rod 108 forming a joint (*e.g.,* pivot point) between the upper rod 106 and the lower rod 108. In some arrangements, the connector pin assembly 109 may be configured in a semi-floating configuration. For example, the connector pin assembly 109 may be fixed to the upper rod 106 or the lower rod 108 through a connection such as a press fit, while having a clearance fitting with the opposite lower rod 108 or upper rod 106. The clearance fit may enable the associated upper rod 106 or lower rod 108 to rotate relative to the connector pin assembly 109. In some arrangements, the connector pin assembly 109 may be configured in a full-floating configuration with a clearance fit between the connector pin assembly 109 and the upper rod 106 and the lower rod 108, such that both the upper rod 106 and the lower rod 108 may rotate relative to the connector pin assembly 109.

FIG. 8 is a perspective view of the lower rod 108 coupled to the upper rod 106 via the connector pin assembly 109. The connector portion 132 of the upper rod 106 may be located within the forked portion 130 of the lower rod 108. The connector pin assembly 109 may extend through the forked portion 130 of the lower rod 108 and the connector portion 132 of the upper rod 106. In some arrangements, the connector pin assembly 109 may be secured with one or more pin locks 134. For example, pin locks 134 may be inserted into the forked portion 130 of the lower rod 108 on opposite ends of the connector pin assembly 109 sandwiching the connector portion 132 between the pin locks 134. The connector pin assembly 109 may be configured to enable the lower rod 108 to pivot relative to the upper rod 106 at the joint between the upper rod 106 and the lower rod 108 about the longitudinal axis 124 of the connector pin assembly 109.

FIG. 9 is a side view of the lower rod 108 of the piston assembly 100. In one or more arrangements, the lower rod 108 may include an upper aperture 902 formed near a first longitudinal end of the lower rod 108 and a lower aperture 904 formed near a second longitudinal end of the lower rod 108. The upper aperture 902 of the lower rod 108 may be sized and shaped to have the connector pin assembly 109 extend therethrough. The lower aperture 904 of the lower rod 108 may be sized and shaped to have a bearing portion of the crankshaft 126 extend therethrough.

FIG. 10A is a bottom perspective view of a piston head 104 having an upper rod 106 coupled thereto according to one or more arrangements not forming embodiments of the present invention. FIG. 10B is a bottom view of the piston head 104 of FIG. 10A. Referring to FIGS. 10A and 10B together, the upper rod 106 is removed from FIG. 10B to better show the structure of the piston head 104. As shown in FIGS. 10A and 10B, in some arrangements, the piston head 104 may include one or more gussets 1002, 1004 for securing and fixing a position of the upper rod 106 relative to the piston head 104. For instance, the one or more gussets may extend downward (downward as depicted in FIG. 10A) and may define an upper rod receiving aperture 1006 in the piston head 104. The upper rod receiving aperture 1006 may be sized and shaped to receive the upper rod 106 and to substantially hold a position of the upper rod 106 fixed relative to the piston head 104 such that the upper rod 106 does not significantly move relative to the piston head 104 during piston strokes. For instance, the one or more gussets 1002, 1004 and upper rod receiving aperture 1006 may hold the position of upper rod 106 fixed relative to the piston head 104 via mechanical interference. In some arrangements, the one or more gussets 1002, 1004 may be integral (e.g., may form an integral body) with the piston head 104. In additional arrangements, the one or more gussets 1002, 1004 may include distinct members from the piston head 104 and may be attached (e.g., welded) to the piston head 104.

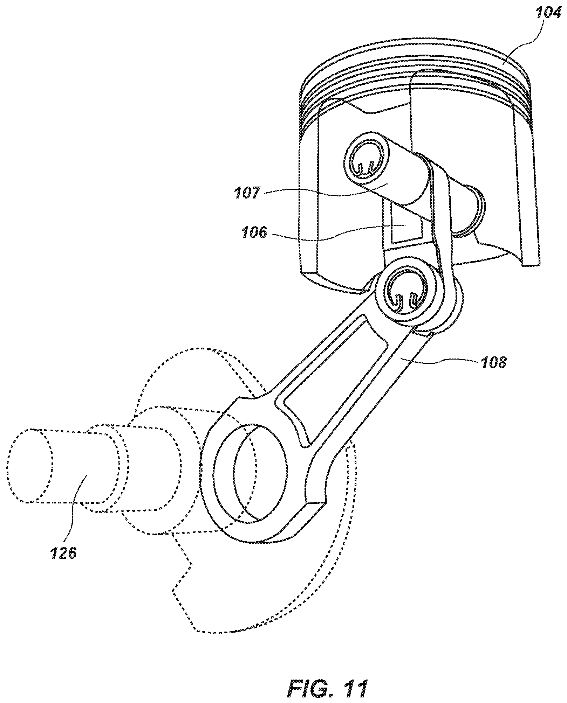

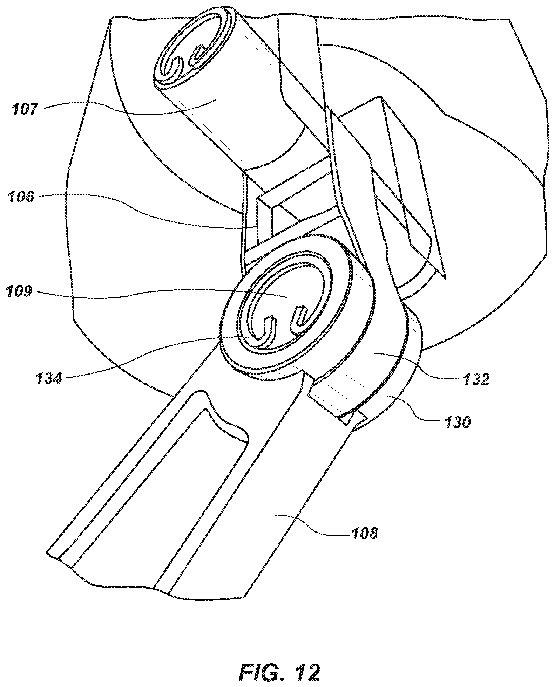

FIGS. 11-13 show additional perspective views of the piston head 104 and crankshaft 126 according to one or more arrangements not forming embodiments of the present invention. Referring to FIGS. 11-13 together, the lower rod 108 may be coupled to an outer journal 1304 of the crankshaft 126. The crankshaft 126 may rotate about a longitudinal axis of the crankshaft 126. The outer journal 1304 of the crankshaft 126 may travel around the longitudinal axis of the crankshaft 126. The lower rod 108 may travel with the outer journal 1304 of the crankshaft 126 about the longitudinal axis of the crankshaft 126.

The connector pin assembly 106 between the upper rod 106 and the lower rod 108 may change an angle between the lower rod 108 and the crankshaft 126 relative to an engine with similar stroke and a connecting rod connecting directly between the piston head 104 and the crankshaft 126 at the same respective positions. For example, the angle between the lower rod 108 and the crankshaft 126 may change more rapidly after the piston head 104 reaches top dead center or bottom dead center. The rapid change in the angle between the lower rod 108 and the crankshaft 126 may enable the lower rod 108 to achieve a more advantageous angle *(e.g.,* an angle providing more leverage) earlier during a stroke. An advantageous angle, relative to conventional piston assemblies, between the lower rod 108 and the crankshaft 126 may be an angle such that the force being transmitted through the lower rod 108 is substantially tangential to the circular motion of the outer journal 1304 of the crankshaft. As the angle between the lower rod 108 and the crankshaft 126 approaches the advantageous angle, less of the force being transmitted by the lower rod 108 may be wasted. Furthermore, wasting less force results in a more efficient transmission of power.

In some arrangements, the more rapidly changing angle between the lower rod 108 and the crankshaft 126 may enable dimensions of the engine 100 to be reduced with less clearance required for the connecting rod assembly. In some arrangements, the more rapidly changing angle between the lower rod 108 and the crankshaft 126 may enable the crankshaft 126 to be configured to impart a wider range of movement to the piston head 104 *(e.g.,* a longer stroke) before additional clearance is required inside the motor to accommodate the movement of the connecting rod assembly. In particular, at the 3 o'clock and 9 o'clock positions (e.g., mid-stroke), a conventional connecting rod may extend in a substantially straight diagonal line from the outer journal 1304 to the piston head 104 requiring more clearance between the connecting rod and internal engine structures than a connecting rod assembly as described.

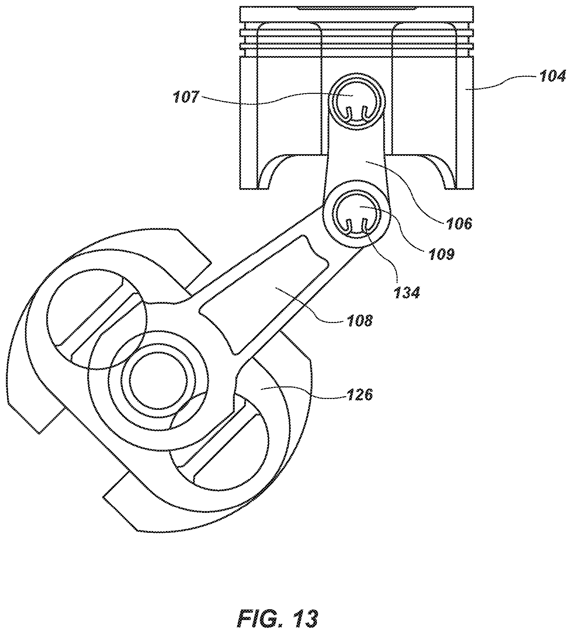

FIG. 13 illustrates a yet further alternative arrangement where the lower rod 108 may be coupled to a central journal 1302 of the crankshaft 126. For example, the engine may include one or more control cylinders where the piston head 104 and connecting rod assembly are maintained stationary. For example, a variable compression engine may include a control cylinder to which one or more piston assemblies are coupled to provide a common reference when varying the travel (e.g., stroke) of the piston assemblies in the active cylinders.

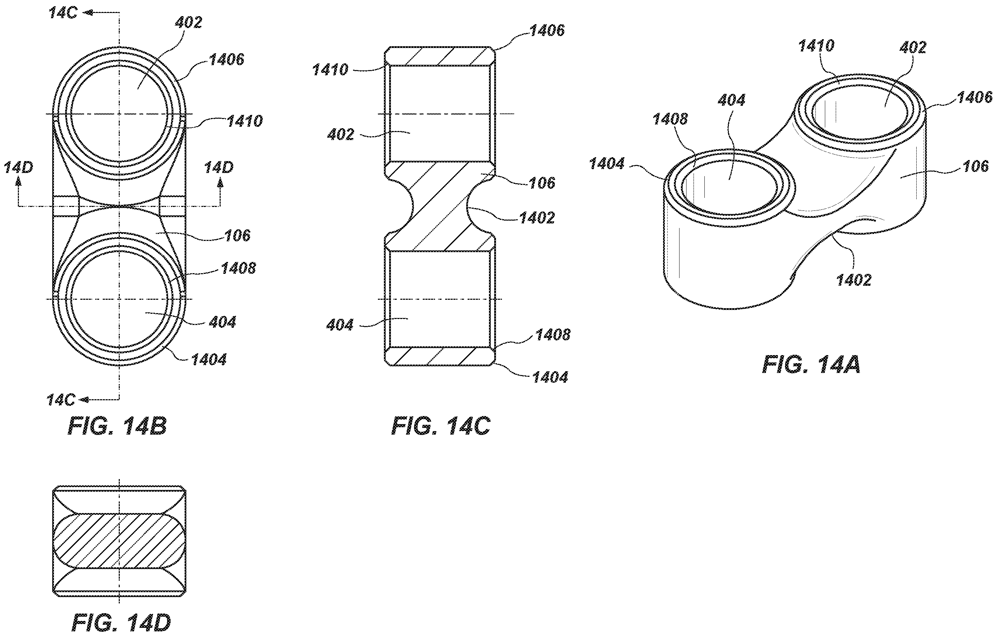

FIG. 14A illustrates a perspective view of the upper rod 106. FIG. 14B illustrates a side view of the upper rod 106. FIG. 14C illustrates a cross-sectional view of the upper rod. FIG. 14D illustrates a cross-sectional view of the upper rod. Referring to FIGS. 14A-14D, the upper rod 106 may include a stem 1402 connecting the upper aperture 402 and the lower aperture 404. In some arrangements, the stem 1402 may have at least one dimension that is substantially the same as the dimensions of the upper rod 106 at the ends of the upper rod 106. For example, the stem 1402 may have a width that is substantially the same as a diameter of the ends of the upper rod 106. In some such arrangements, the stem 1402 may have another dimension that varies along the length of the stem 1402. For example, a surface of the stem 1402 may be recessed in a central portion of the stem 1402. The recess may enable the stem 1402 to be constructed with fewer materials, reducing a mass of the upper rod 106. The dimensions of the stem 1402 may be configured such that more material is present in regions of the stem 1402 where higher amounts of stress may be present, while reducing the amount of material in lower stress regions of the upper rod 106.

The ends of the upper rod 106 may include material surrounding and defining the upper aperture 402 and the lower aperture 404. The material surrounding the upper aperture 402 may include an outer chamfer 1406 along an outer edge of the material and an inner chamfer 1410 along an inner edge defining the upper aperture 402. The material surrounding the lower aperture 404 may include an outer chamfer 1404 along an outer edge of the material and an inner chamfer 1408 along an inner edge defining the lower aperture 404. The chamfers 1404, 1406, 1408, and 1410 may reduce stress risers in the material and/or reduce friction between the upper rod 106 and other components such as the gudgeon pin assembly 107, the connecting pin assembly 109, the piston head 104, and the lower rod 108.

In some arrangements, the upper aperture 402 and the lower aperture 404 may be offset from one another. For example, the upper aperture 402 and the lower aperture 404 may be offset in a direction substantially parallel to the axes of the gudgeon pin assembly 107 and connecting pin assembly 109. In another example, the upper aperture 402 and the lower aperture 404 may be offset from each other in a direction substantially transverse to the axes of the gudgeon pin assembly 107 and connecting pin assembly 109. The direction and/or magnitude of the offset may be configured to reduce one or more of rotational balancing, engine harmonics, and/or side loads on the piston.

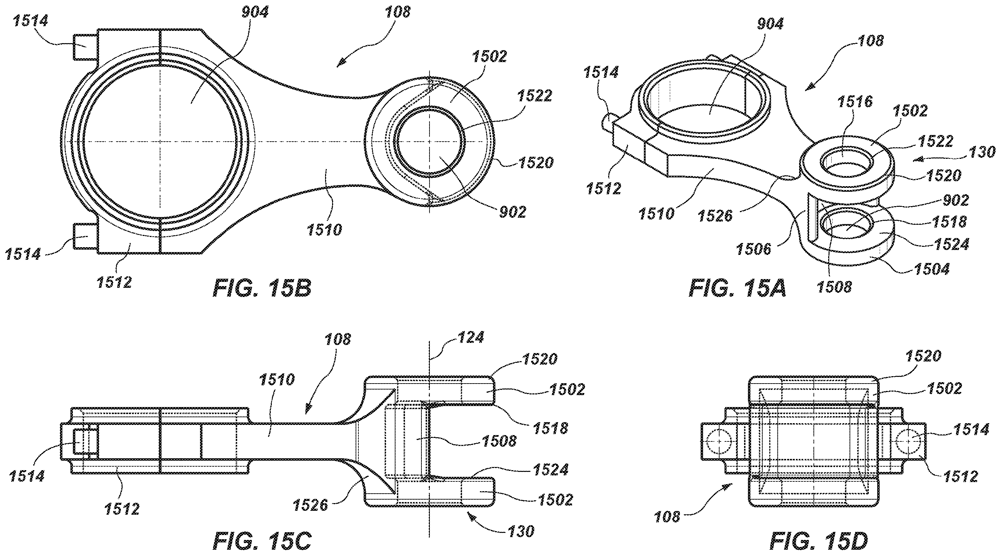

FIG. 15A illustrates a perspective view of the lower rod 108. FIG. 15B illustrates a front view of the lower rod 108. FIG. 15C illustrates a side view of the lower rod 108. FIG. 15D illustrates a bottom view of the lower rod 108. Referring to FIGS. 15A-15D, in some arrangements, the lower rod 108 may be formed in at least two parts. The lower rod 108 may include a rod portion 1510 and a bearing cap 1512. The bearing cap 1512 and rod portion 1510 may define the lower aperture 904. The bearing cap 1512 may be configured to be removed to enable a journal of the crankshaft 126 to be inserted into the portion of the lower aperture 904 defined by the rod portion 1510. The bearing cap 1512 may be coupled to the rod portion 1510 after the journal of the crankshaft 126 is inserted into the lower aperture 904 of the rod portion 1510, enclosing the journal of the crankshaft 126 in the lower aperture 904 of the lower rod 108. The bearing cap 1512 may be coupled to the rod portion 1510 through a hardware connection 1514, such as studs, nuts, bolts, screws, *etc.*

The lower rod 108 may include a forked portion 130. The forked portion 130 may include at least two annular sections 1502 defining the upper aperture 902 and a base section 1508 separating the at least two annular sections 1502 defining an opening between the at least two annular sections configured to receive the connecting portion 132 of the upper rod 106. The base section 1508 may include a curved surface having a complementary shape to the end surface of the upper rod 106 such that the lower rod 108 may pivot freely when coupled to the upper rod 106. In some arrangements, the base section 1508 and/or the at least two annular sections 1502 may include a limiting element configured to limit a rotation of the lower rod 108 relative to the upper rod 106. For example, the limiting element may include a stop, a gear, a set of interlocking teeth, *etc.* configured to substantially prevent the lower rod 108 and the upper rod 106 from reaching a critical angle, such as a locking angle or an angle that will generate excessive side loads on the piston causing the piston skirt to contact the cylinder wall.

The at least two annular sections 1502 may include chamfered edges 1518, 1520, and 1522. For example, the at least two annular sections may include a chamfered edge 1518 between an inner surface 1516 of the upper aperture 902 and an inner surface 1524 of the associated annular section 1502. The at least two annular sections 1502 may also include a chamfered edge 1520 between a radial surface 1504 and a face surface 1505 of the associated annular section 1502. The at least two annular sections 1502 may further include a chamfered edge 1522 between inner surface 1516 of the upper aperture 902 and the face surface 1505 of the associated annular section 1502.

The lower rod 108 may include connecting structures 1506, 1526 coupling the forked portion 130 to the rod portion 1510 of the lower rod 108. A side connecting structure 1506 may form a rounded surface that is substantially tangential with both the rod portion 1510 of the lower rod 108 and the at least two annular sections 1502. The side connecting structure 1506 may operatively couple the at least two annular sections 1502 to each other and operatively couple the at least two annular sections 1502 to the rod portion 1510 of the lower rod 108. A face connecting structure 1526 may couple the at least two annular sections 1502 to a respective face of the rod portion 1510 of the lower rod 108. For example, the face connecting structure 1526 may extend between the face of the rod portion 1510 of the lower rod 108 to the radial surface 1504 of the respective annular section 1502. In some arrangements, the face connecting structure 1526 may include a rounded surface that may be substantially tangential to both the face of the rod portion 1510 of the lower rod 108 and the radial surface 1504 of the respective annular section 1502.

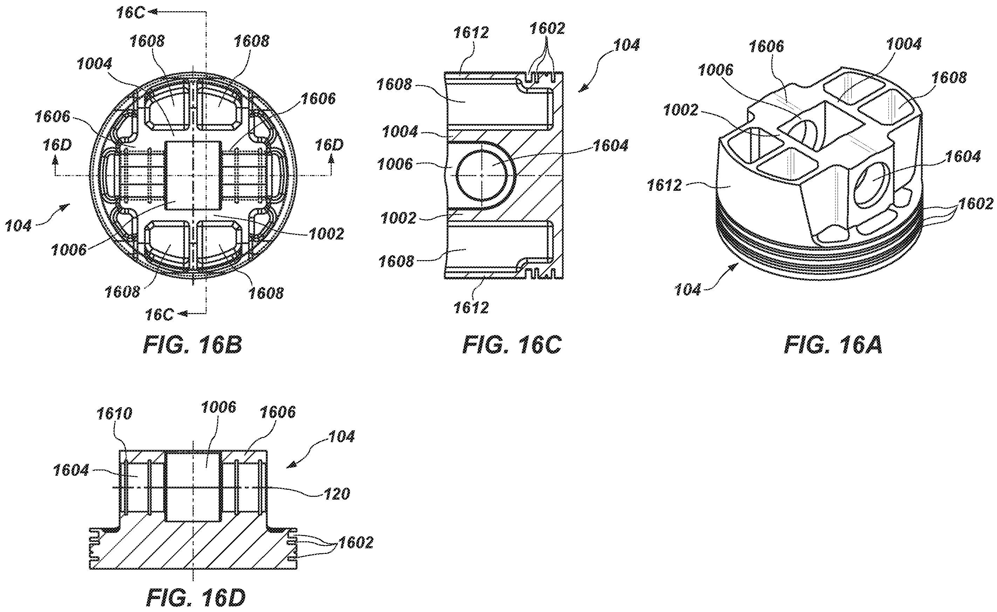

FIG. 16A shows a perspective view of the piston head 104 according to one or more arrangements not forming embodiments of the present invention. FIG. 16B shows a bottom view of the piston head 104. FIG. 16C shows a cross-sectional view of the piston head 104. FIG. 16D shows a cross-sectional view of the piston head 104. Referring to FIGS. 16A-16B, the upper rod receiving aperture 1006 of the piston head 104 may be defined by the gussets 1002, 1004 and the pin support structure 1606. In some arrangements, the upper rod receiving aperture 1006 may be configured to limit rotation of the upper rod 106 relative to the piston head 104. For example, in some such arrangements, the upper rod receiving aperture 1006 may be configured to limit the how far the upper rod 106 may rotate relative to the piston head 104, such as between about -15° and about 15°, between about -10° and about 10°, or between about -5° and about 5°. In other arrangements, the upper rod receiving aperture 1006 may be configured to substantially prevent rotation of the upper rod 106 relative to the piston head 104.

The piston head 104 may include one or more annular grooves 1602 *(e.g.,* ring grooves). The annular grooves 1602 may be configured to receive piston rings (*e.g.,* compression rings, sealing rings, oil rings, *etc.).* The piston rings may be configured to form a seal between the piston head 104 and a respective cylinder wall in the engine 100 and reduce the surface area of the piston assembly 102 in contact with the cylinder wall of the engine 100. The piston head 104 may also include skirts 1612. The skirts 1612 may extend from a top portion of the piston head 104 below the annular grooves 1602 at substantially the same diameter of the top portion of the piston head 104. The skirts 1612 may be radially positioned about 90° from the pin support structure 1606 and/or substantially radially aligned with the gussets 1002, 1004. The skirts 1612 may be configured to substantially maintain an orientation of the piston head 104 relative to the respective cylinder in the engine 100 when side load forces are transmitted to the piston head 104 through the connecting rod assembly. For example, the skirts 1612 may be configured to only contact the cylinder wall if the piston head 104 begins to rotate about the gudgeon pin assembly 107 relative to the cylinder and substantially prevent the rotation. The skirts 1612 and the gussets 1002, 1004 may define one or more cavities 1608 in the piston head 104. The one or more cavities 1608 may reduce a material mass of the piston head 104 and/or enable the piston head 104 to dissipate heat.

The pin support structure 1606 may include a pin receiving aperture 1604 *(e.g.,* pin boss) configured to receive the gudgeon pin assembly 107. The pin receiving aperture 1604 may include one or more annular grooves configured to receive a pin lock 134 to secure the gudgeon pin assembly 107 in the pin receiving aperture 1604.

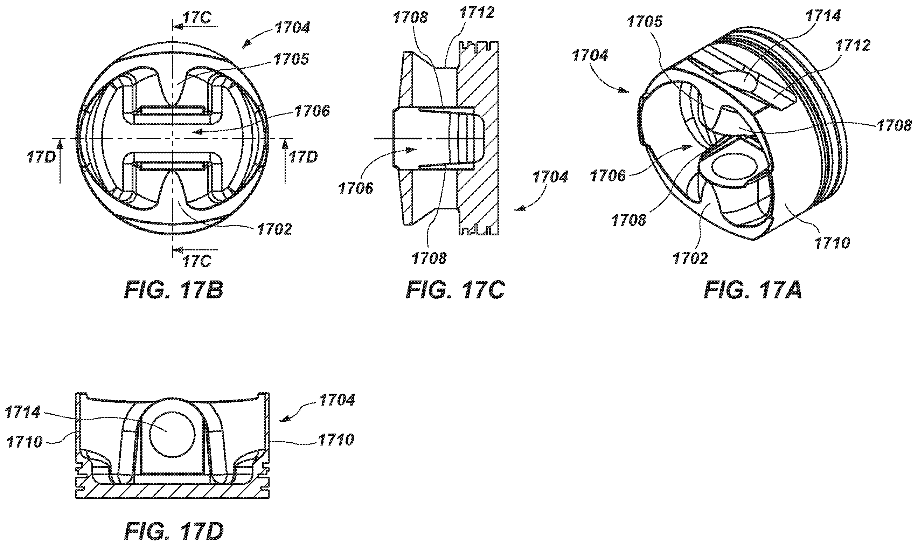

FIG. 17A shows a perspective view of a piston head 1704 according to one or more additional arrangements not forming embodiments of the present invention. FIG. 17B shows a bottom view of the piston head 1704 of FIG. 17A. FIG. 17C shows a side cross-sectional view of the piston head 1704 of FIG. 17A. FIG. 17D shows another side cross-sectional view of the piston head 1704 of FIG. 17A. Referring to FIGS. 17A-17D, the piston head 1704 may be utilized within any of the piston assemblies (e.g., piston assembly 100) and any elements of the piston assemblies described above in regard to FIGS. 1-16D.

As shown in FIGS. 17A-17D, in some arrangements, the piston head 1704 may include one or more gussets 1702, 1705 for securing and fixing a position of an upper rod (e.g., upper rod 106) relative to the piston head 1704. For instance, the one or more gussets may extend downward (downward as depicted in FIG. 17A-17D) and may at least partially define an upper rod receiving aperture 1706 in the piston head 1704. The upper rod receiving aperture 1706 may be sized and shaped to receive the upper rod and to substantially hold a position of the upper rod fixed relative to the piston head 1704 such that the upper rod does not significantly move relative to the piston head 1704 during piston strokes (e.g., the piston strokes described above). For instance, the one or more gussets 1702, 1705 and upper rod receiving aperture 1706 may hold the position of upper rod fixed relative to the piston head 1704 via mechanical interference. In some such arrangements, the gussets 1702, 1705 may include protrusions 1708 *(e.g.,* ridges) extending from the gussets 1702, 1705 to at least partially define the upper rod receiving aperture 1706. In some such arrangements, the one or more gussets 1702, 1705 may be integral (e.g., may form an integral body) with the piston head 1704. In additional arrangements, the one or more gussets 1702, 1705 may include distinct members from the piston head 1704 and may be attached (e.g., welded) to the piston head 1704. The piston head 1704 may be usable with any of the gudgeon pin assemblies (e.g., the gudgeon pin assembly 107) described above.

In some arrangements, piston skirts 1710 may be defined by one or more recesses 1712 along a side of the piston head 1704. A pin receiving aperture 1714 may be defined within the recesses 1712. The pin receiving aperture 1714 may extend through the gussets 1702, 1705 between the recesses 1712 on opposite sides of the piston head 1704.

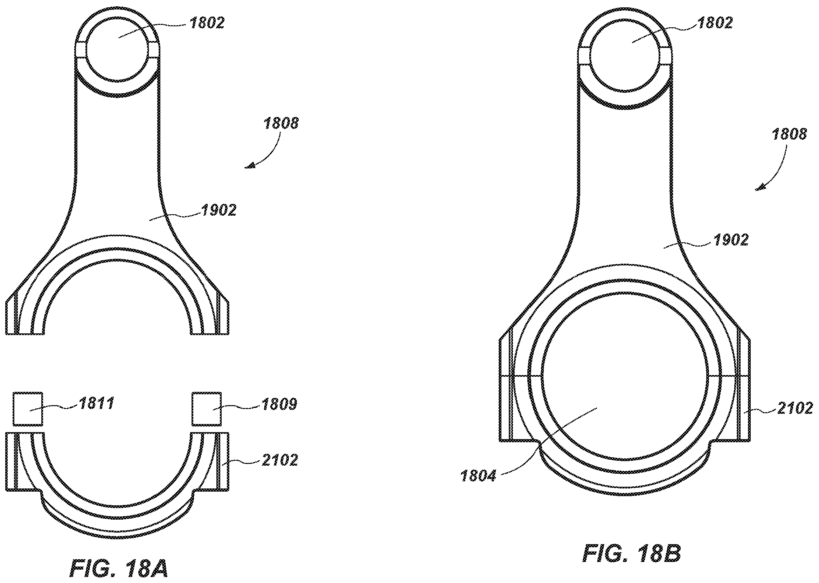

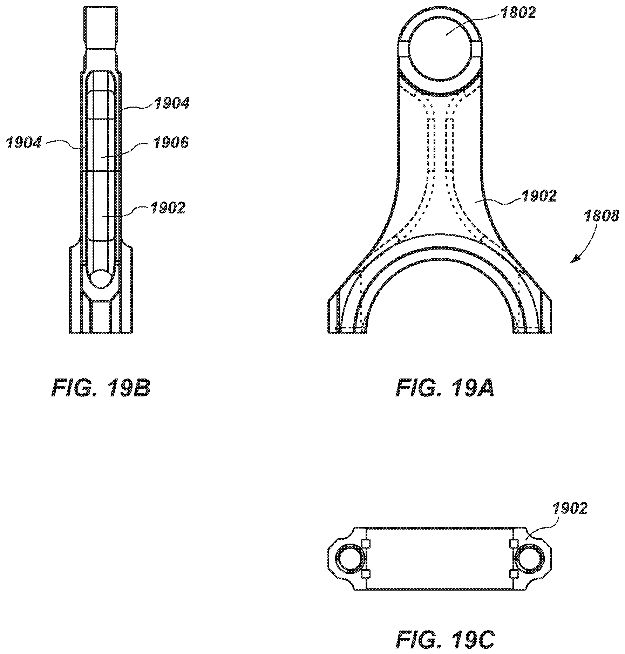

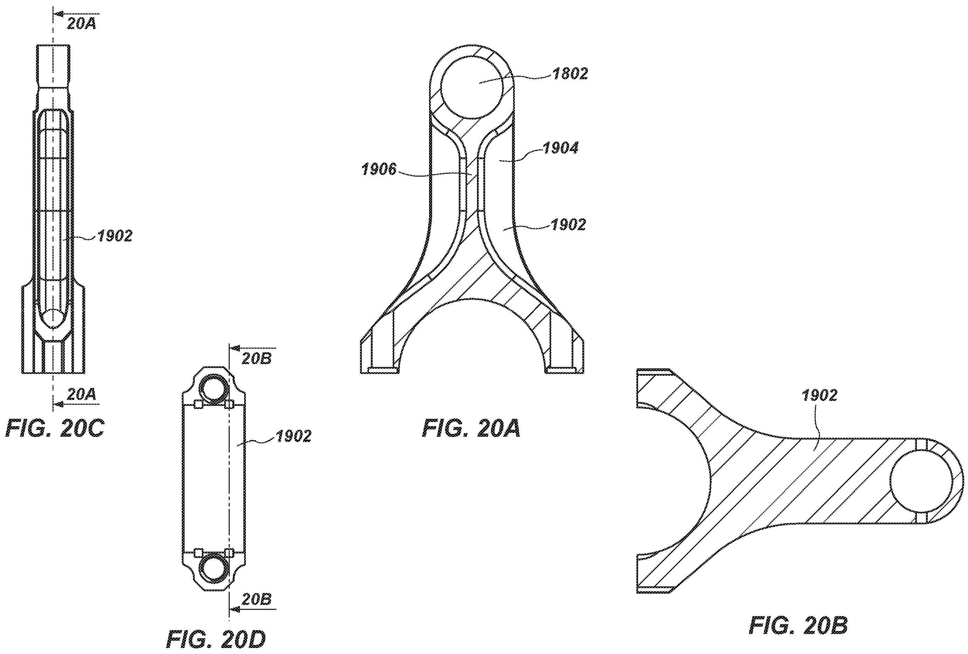

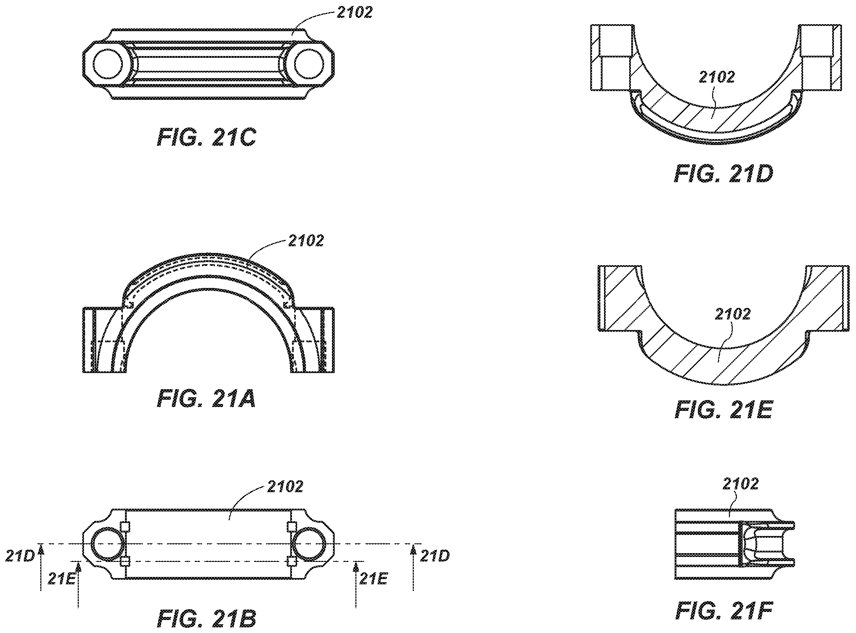

FIG. 18A is a side view of a lower rod 1808 in an exploded configuration according to one or more additional arrangements not forming embodiments of the present invention. FIG. 18B is a side view of the lower rod 1808 of FIG. 18A in an assembled configuration. FIGS. 19A-19C show various views of an upper portion 1902 of the lower rod 1808 according to one or more arrangements not forming embodiments of the present invention. FIGS. 20A-20D show various additional views of the upper portion 1902 of the lower rod 1808 according to one or more arrangements not forming embodiments of the present invention. FIGS. 21A-21F show various views of a lower portion 2102 of the lower rod 1808 according to one or more arrangements not forming embodiments of the present invention.

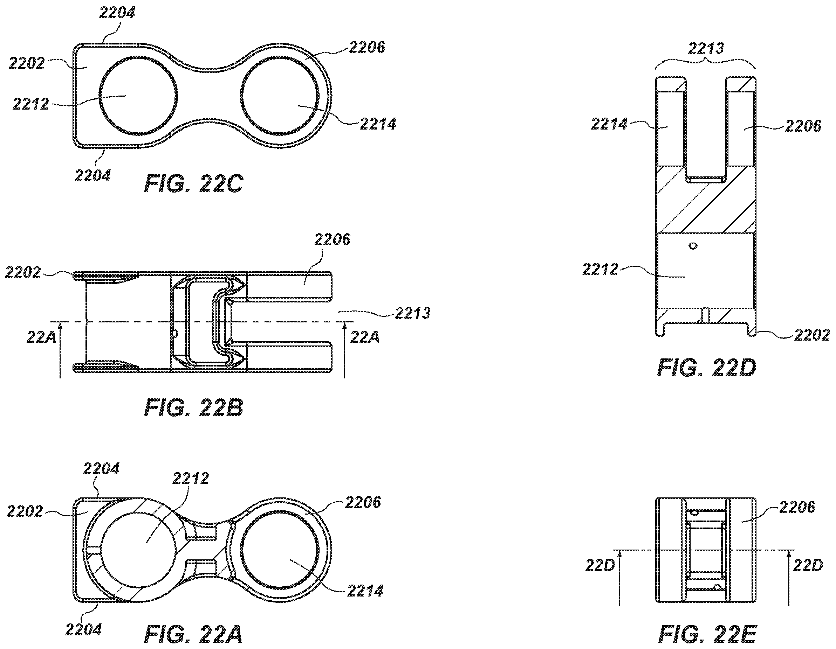

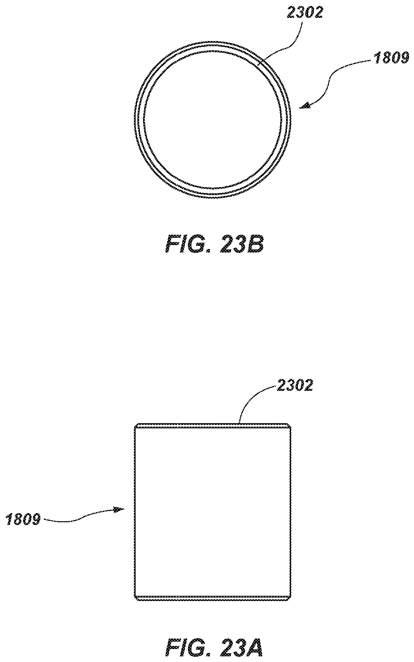

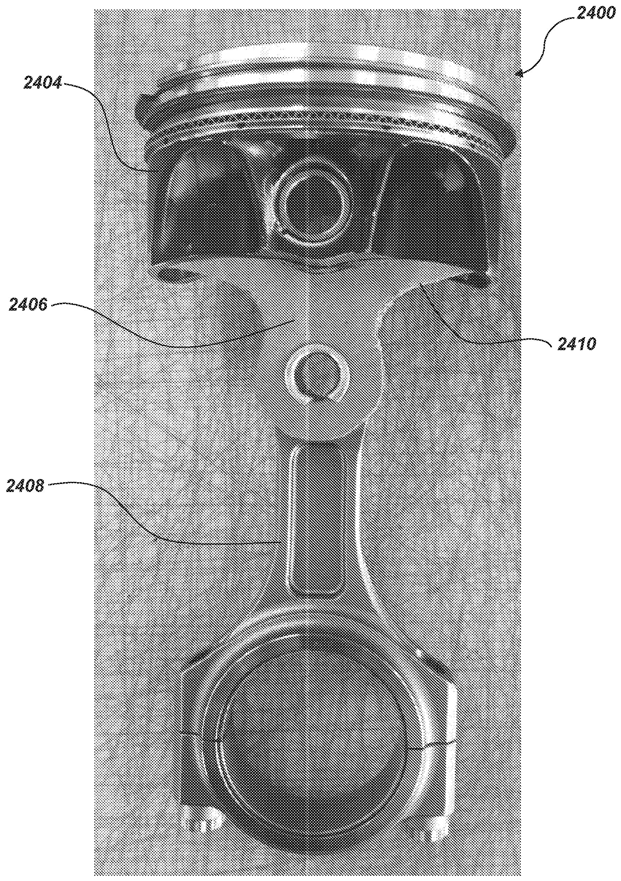

Referring to FIGS. 18A-21F together, the lower rod 1808 may be utilized within any of the piston assemblies (e.g., piston assembly 100) and any elements of the piston assemblies described above in regard to FIGS. 1-17D. Furthermore, referring to 18A-21F together, the upper portion 1902 of the lower rod 1808 and the lower portions 2102 of the lower rod 1808 may be connected together via fasteners and/or alignment sleeves 1809, 1811. The alignments sleeves 1809, 1811 are shown in greater detail in regard to FIGS. 23A and 23B. As shown in FIGS. 23A and 23B, the alignment sleeves 1809, 1811 may include a chamfer edge 2302 formed on each longitudinal end of the alignment sleeves 1809, 1811. The upper portion 1902 and the lower portion 2102 of the lower rod 1808 may define a lower aperture 1804. The lower aperture 1804 may be configured to couple the lower rod 1808 to a journal on the crankshaft 126 as described above. The upper portion 1902 of the lower rod 1808 may include an upper aperture 1802 configured to couple the lower rod 1808 to the upper rod 2206, described below with respect to FIGS. 22A-22E.

In some arrangements, the lower rod 1808 may include one or more flanges 1904 connected through a web 1906, such as I-beam connecting rods, A-beam connecting rods, or H-beam connecting rods.

FIGS. 22A-22E show various views of an upper rod 2206 according to one or more arrangements not forming embodiments of the present invention. Similar to the upper rod 106 described above, the upper rod 2206 may be coupled to a piston head (e.g., piston head 1704) via a gudgeon pin assembly (e.g., gudgeon pin assembly 107) at a first longitudinal end of the upper rod 2206 and may be coupled to a lower rod (e.g., lower rod 1808) at a second opposite longitudinal end of the upper rod 2206. In some such arrangements, the upper rod 2206 may be coupled to a piston head 1704 proximate to or at a centroid of the piston head 1704. In one or more arrangements, the upper rod 2206 may be coupled to the piston head 1704 at a point that is centered between an upper surface and lower surface of the piston head 1704 and intersecting a center longitudinal axis of the piston head 1704. In some arrangements, the upper rod 2206 may be fixed relative to the piston head 1704. For instance, the upper rod 2206 may not rotate and/or translate relative to the piston head 1704 during use. In some arrangements, the upper rod 2206 may include indexing features 2202 configured to substantially rotationally fix the upper rod 2206 within the upper rod receiving aperture 1706 defined in the piston head 1704. For example, the indexing features 2202 may include a flange having substantially straight sides 2204. The substantially straight sides 2204 may be configured to interface with the gussets 1702, 1705 and/or the protrusions 1708 in the piston head 1704 to limit and/or substantially prevent the upper rod 2206 from rotating relative to the piston head 1704.

The upper rod 2206 may extend in an axial direction (e.g., in a direction parallel to the longitudinal axis of the piston head 1704) from the piston head 1704 to a region below the piston head 1704. For instance, a longitudinal length of the upper rod 2206 may be greater than a distance from a point at which the upper rod 2206 is coupled to the piston head 1704 to a lowermost surface of the piston head 1704. Furthermore, the longitudinal axis of the upper rod 2206 may be parallel to the longitudinal axis of the piston head 1704. In view of the foregoing, a lower longitudinal end of the upper rod 2206 may be oriented beneath the piston head 1704 when the upper rod 2206 is coupled to the piston head 1704. As depicted in FIGS. 22A-22E, the upper rod 2206 may include a forked portion 2213 for connecting to the lower rod 1808. The forked portion 2213 is described in greater detail below. For instance, in some arrangements, the upper rod 2206 may not include forked portion, and rather, the lower rod 1808 may include a forked portion for connecting to the upper rod 2206.

The upper rod 2206 may include an upper aperture 2212 configured to receive a gudgeon pin assembly 107 and a lower aperture 2214 configured to receive a connector pin assembly 109. The gudgeon pin assembly 107 may be inserted into the upper aperture 2212 through the pin receiving apertures 1714 in the piston head 1704. The lower aperture 2214 may be extend through the forked portion 2213 of the upper rod 2206. A knuckle joint may be formed to connect the lower rod 1808 to the upper rod 2206 with the connector pin assembly 109 being inserted through the lower aperture 2214 of the upper rod 2206 and the upper aperture 1802 of the lower rod 1808, wherein the upper aperture 1808 of the lower rod 1808 is disposed within the forked portion 2213 of the upper rod 2206

FIG. 24 shows a piston assembly 2400 according to one or more embodiments of the present invention. Components of the piston assembly 2400 may be utilized within any of the piston assemblies (e.g., piston assembly 100) and any elements of the piston assemblies described above in regard to FIGS. 1-23B. The piston head 2404 is coupled to the lower rod 2408 through an upper rod 2406. The upper rod 2406 includes one or more support flanges 2410 that extend from the upper rod 2406 to a side structure of the piston head 2404 comprising the interior portion of the piston skirt, which may comprise internal gussets, *etc.* In some embodiments, the support flanges 2410 may extend in a substantially straight line from the upper rod 2406 to the side structure of the piston head 2404. In some embodiments, the support flanges 2410 may have a curved profile. The support flanges 2410 may substantially prevent the upper rod 2406 from rotating relative to the piston head 2404.

Referring to FIGS. 1-24 together, some embodiments include a lower rod that includes a forked portion. Additionally, the forked portion may be formed either on the upper rod or the lower rod. Furthermore, the upper rod may be attached to a gudgeon pin (e.g., a wrist pin) via any of the manners described herein and/or any conventional manners or combinations of manners. Additionally, the lower rod may be coupled to the upper rod via any manners described herein, conventional manners, and/or combinations of manners.

In some embodiments, the upper rod may be coupled to a gudgeon pin (e.g., the wrist pin between the upper rod and the lower rod) in a ball and socket configuration. For instance, the upper rod may free float relative to the lower rod. The foregoing configurations may reduce wear on the upper rod during operation of the piston assembly.

The upper rod is fixed (e.g., locked) relative to the piston head. It can be fixed as such via any manner. For instance, according to some embodiments, the upper rod may be fixed relative to the piston head via any type of mechanical interference between the upper rod and the piston (e.g., welds, fittings, fasteners, adhesives, brazing). In some embodiments, the upper rod and the piston head may form a single integral body. In one or more embodiments, the upper rod may be fixed relative to the piston head via the gudgeon pin. For instance, the gudgeon pin (e.g., wrist pin) may have a non-circular shaped cross-section. For example, the gudgeon pin may have a square or rectangular-shaped cross-section, an oval-shaped cross-section, a triangular-shaped cross-section, an irregular-shaped cross-section, or any combination of the foregoing shaped cross-sections. In further embodiments, the upper rod may be fixed (e.g., locked) relative to the piston head via stops, limiters, dowels, formed angles, or centric formations (e.g., upper rod receiving apertures 1006, 1706, gears, cams, slider grooves, *etc.)* formed on any of the upper rod, the lower rod, and/or the piston head.

In one or more embodiments, any element of the piston assembly (e.g., the piston head, the upper rod, the lower rod, the gudgeon pin assembly, and the connector pin assembly) may include a steel, an alloy, and/or composite material. However, the piston assembly is not limited to any specific type of material or material combination.

The piston assemblies defined by the invention may provide additional advantages over conventional piston assemblies. For instance, in comparison to conventional piston assemblies, the piston assemblies of the present invention may provide more torque lbf·ft (e.g., leverage), which may provide more inertia (lbs) to a crankshaft. For example, the piston assemblies of the present invention may provide about 12% more inertia (lbs) to the crankshaft in comparison to conventional piston assemblies.

Additionally, the piston assemblies of the present invention may translate the piston head 104 at a faster rate and/or change an angle between the lower connecting rod and the crankshaft at a faster rate from top dead center (TDC) during a piston stroke in comparison to conventional piston assemblies. As a result, the piston assemblies of the present invention may yield an improved angle at which the piston assembly is rotating the crank at a highest cylinder pressure in comparison to conventional piston assemblies. Accordingly, a resulting power stroke of the piston assemblies of the present invention may provide more usable energy.

Moreover, the piston assemblies of the present invention translate the piston at a faster rate during portions of a piston stroke in comparison to conventional piston assemblies. As a result, the piston assemblies of the present invention may enable ignition to occur more proximate to TDC in comparison to conventional piston assemblies. Enabling ignition to occur more proximate to TDC provides more time for combustion. By providing more time for combustion the mixture of fuel and air may burn more completely during the power stroke such that less unburned fuel and/or harmful emission gasses resulting from partially burned fuel, such as carbon-monoxide (CO), hydrocarbons (HC), and nitrogen oxides (NOx).This may result in cleaner (e.g., better) emissions.

The piston assemblies of the present invention also move the piston head at a higher velocity within the piston chamber between 12 o'clock and 3 o'clock (0° and 90°) in comparison to conventional piston assemblies. The higher velocity of the piston head may reduce the amount of time the piston spends at or near top dead center (e.g., dwell time). Combustion that occurs while the piston is at or near top dead center and not moving is substantially converted to waste heat rather than work. As a result, the piston assemblies of the present invention provide more effective ignition by moving away from top dead center at a higher rate effectively reducing the amount of waste heat generated by combustion. The reduction in dwell time and waste heat may also reduce an engine's proclivity to detonation (e.g., uncontrolled ignition often resulting from high compression and/or low octane fuels). Therefore, the piston assemblies of the present invention may enable engines to operate at higher compression ratios, which may improve engine efficiency and/or power production. The piston assemblies of the present invention may also enable engines to be operated with lower octane fuel, enabling higher performance and/or more efficient engines to be operated on less expensive fuel. Furthermore, the piston assemblies of the present invention cause the piston head to drop further within the piston chamber from 12 o'clock and 3 o'clock in comparison to conventional piston assemblies. Both of the foregoing behaviors result in the piston assemblies of the present invention providing improved volumetric efficiency, improved scavenging, increased negative pressure in the cylinder, and additional air intake (e.g., air volume intake) into the piston chamber (e.g., cylinder) in comparison to conventional piston assemblies. The foregoing behaviors provide increases in energy produced by the piston assemblies in comparison to conventional piston assemblies.

Additionally, the piston assemblies of the present invention cause the piston head to move at a slower rate from 6 o'clock position to the 9 o'clock position during an exhaust stroke in comparison to conventional piston assemblies. Moving the piston head at a slower rate from the 6 o'clock position to the 9 o'clock position during an exhaust stroke may reduce heat buildup and an overall engine temperature during operation in comparison to conventional piston assemblies.

Furthermore, the piston assemblies of the present invention cause the piston head to move at a faster rate from 9 o'clock position to the 12 o'clock position during an exhaust stroke in comparison to conventional piston assemblies. Moving the piston head at a faster rate from the 9 o'clock position to the 12 o'clock position during an exhaust stroke may create more negative pressure within the piston chamber which leads to improved scavenging and expelling more exhaust and/or unburned fuel in comparison to conventional piston assemblies. Expelling more exhaust and/or unburned fuel enables more fresh air to be drawn into the piston chamber (e.g., cylinder) subsequently in comparison to conventional piston assemblies.

Moreover, the piston assemblies of the present invention may provide more air flow at a lower valve lift, which provides/enables a less abrupt profile on a cam lobe, reduces fatigue, and reduces failure in comparison to conventional piston assemblies.

The piston assemblies of the present invention may further enable an intake valve to be open for longer periods of time with less reversion in comparison to conventional piston assemblies. Additionally, the piston assemblies of the present invention reduce a dwell time (e.g., a time during which the piston remains (e.g., sits) at top dead center before reversing direction). Moreover, the piston assemblies of the present invention may provide improved scavenging during valve overlap in comparison to conventional piston assemblies.

Additionally, the piston assemblies of the present invention may provide increased clearance relative to other elements of an engine during the middle portion of each stroke *(e.g.,* the 3 o'clock and 9 o'clock positions). As a result, a rod-to-cylinder wall clearance is improved when increasing the stroke of the engine (e.g., stroking the engine), such as installing a crankshaft with a longer stroke to increase engine displacement.

Furthermore, the piston assemblies of the present invention, by utilizing two rods (e.g., the upper rod and the lower rod) and two sets of wrist pins, may reduce impact forces by 50% on individual components. For example, each wrist pin assembly includes small amounts of clearance between the wrist pins and the associated connecting rods, pistons, crankshaft, *etc.* The small amount of clearance may be filled with oil or another lubricating fluid during engine operation. Impact forces may be transmitted through these clearance areas and the associated lubricating fluid, such that an initial shock, jerk, impact, *etc.* caused by the impact forces may be absorbed and/or dissipated by the lubricating fluid and clearance in the connection. For instance, the piston assemblies of the present invention operate as a shock absorber, and when utilized with the faster angle change at TDC (which reduces the hammer effect), results in less stress being transferred to the crankshaft, bearings, rods (e.g., upper rod and lower rod), and piston head.

Moreover, the piston assemblies of the present invention may reduce rocking friction on a piston skirt of the piston head against the inner wall of the piston chamber (e.g., cylinder). Furthermore, the piston assemblies of the present invention may function even more efficiently with Turbo Chargers and Super Chargers. For example, the higher velocity of the piston head at or near top dead center may provide more space in the cylinder earlier in the intake stroke enabling a turbo charger or super charger to input a greater amount of air during the intake stroke. Moreover, common problems with turbo charger and super charger applications include an increased amount of heat and detonation often requiring turbocharged and supercharged applications to be operated at lower compression ratios and/or higher octane fuels. The improved heat dissipation reduced amount of dwell time of the piston assemblies of the present invention may improve the efficiency of turbo charged and super charged applications.

The present invention is defined exclusively by the appended claims.

## Claims

1. A piston assembly, comprising:
a piston head (2404) for reciprocating within a cylinder of an engine, the piston head including a piston skirt;
an upper rod (2406) coupled to the piston head at one longitudinal end of the upper rod and fixed relative to the piston head; and
a lower rod (2408) rotatably coupled to an opposite longitudinal end of the upper rod, the lower rod configured to pivot about the opposite longitudinal end of the upper rod,
wherein the lower rod is configured to couple to a crankshaft (126) at a longitudinal end of the lower rod opposite the upper rod,
**characterised in that** one or more support flanges (2410) extend from the upper rod (2406) to an interior portion of the piston skirt, said support flanges (2410) substantially preventing the upper rod (2406) from rotating relative to the piston head (2404).

2. The piston assembly of claim 1, wherein the piston head comprises:
a first gusset (1002) extending axially from an upper portion of the piston head; and
a second gusset (1004) extending axially from the upper portion of the piston head, the first and second gussets defining an upper rod receiving aperture (1006).

3. The piston assembly of claim 2, wherein the upper rod is disposed within the upper rod receiving aperture of the piston head.

4. The piston assembly of claim 3, wherein the upper rod receiving aperture of the piston head is sized and shaped to fix the upper rod relative to the piston head.

5. The piston assembly of any one of claims 1 through 3, further comprising a gudgeon pin assembly (107) coupling the upper rod to the piston head.

6. The piston assembly of claim 5, wherein the gudgeon pin assembly comprises two or more pin locks (134) and a gudgeon pin (107).

7. The piston assembly of any one of claims 1 through 3, further comprising a connector pin assembly (109) coupling the upper rod to the lower rod.

8. The piston assembly of claim 7, wherein the lower rod comprises a forked portion, the upper rod comprises a connector portion, and the connector pin assembly extends through the forked portion of the lower rod and the connector portion of the upper rod.

9. An engine, comprising:
one or more cylinders (112);
a crankshaft (126);
one or more piston assemblies (100) according to any of claims 1 to 8.

10. The engine of claim 9, wherein the piston head comprises:
a first gusset (1002) extending axially from a upper portion of the piston head; and
a second gusset (1004) extending axially from the upper portion of the piston head, the first and second gussets defining an upper rod receiving aperture (1006).

11. The engine of claim 10, wherein the upper rod is disposed within the upper rod receiving aperture of the piston head, wherein the upper rod receiving aperture of the piston head is sized and shaped to fix the upper rod relative to the piston head.

12. The engine of any one of claims 9 through 11, further comprising a connector pin assembly (109) coupling the upper rod to the lower rod, wherein the lower rod comprises a forked portion, the upper rod comprises a connector portion, and the connector pin assembly extends through the forked portion of the lower rod and the connector portion of the upper rod.

13. A method of forming a piston assembly according to any of claims 1 to 8, the method comprising:
coupling an upper rod (106) to a piston head (104) at a first longitudinal end of the upper rod;
fixing a position of the upper rod relative to the piston head, wherein the piston head includes a piston skirt, and one or more support flanges (2410) extending from the upper rod (2406) to an interior portion of the piston skirt, said support flanges (2410) substantially preventing the upper rod (2406) from rotating relative to the piston head (2404);
rotatably coupling a lower rod (108) to a second longitudinal end of the upper rod; and
rotatably coupling the lower rod to a crankshaft (126) of an engine (102).

14. The method of claim 13, wherein coupling an upper rod to a piston head comprises coupling the upper rod to the piston head with a gudgeon pin assembly (107).

15. The method of any one of claims 13 or 14, wherein rotatably coupling a lower rod to the upper rod comprises coupling the lower rod to the upper rod with a connector pin assembly (109).

## Patentansprüche

1. Kolbenanordnung, umfassend:
einen Kolbenkopf (2404) zum Auf- und Abbewegen innerhalb eines Zylinders eines Motors, wobei der Kolbenkopf einen Kolbenschaft einschließt;
eine obere Stange (2406), die an einem Längsende der oberen Stange mit dem Kolbenkopf gekoppelt und relativ zu dem Kolbenkopf fixiert ist; und
eine untere Stange (2408), die drehbar mit einem gegenüberliegenden Längsende der oberen Stange gekoppelt ist, wobei die untere Stange konfiguriert ist, um um das gegenüberliegende Längsende der oberen Stange zu schwenken,
wobei die untere Stange konfiguriert ist, um sich mit einer Kurbelwelle (126) an einem Längsende der unteren Stange gegenüber der oberen Stange zu koppeln,
**dadurch gekennzeichnet, dass** sich eine oder mehrere Stützflansche (2410) von der oberen Stange (2406) zu einem inneren Abschnitt des Kolbenschafts erstrecken, wobei die Stützflansche (2410) im Wesentlichen verhindern, dass sich die obere Stange (2406) relativ zum Kolbenkopf (2404) dreht.

2. Kolbenanordnung nach Anspruch 1, wobei der Kolbenkopf umfasst:
eine erste Verstärkungsrippe (1002), die sich axial von einem oberen Abschnitt des Kolbenkopfes erstreckt; und
eine zweite Verstärkungsrippe (1004), die sich axial von dem oberen Abschnitt des Kolbenkopfes erstreckt, wobei die erste und zweite Verstärkungsrippe eine obere Stangenaufnahmeöffnung (1006) definieren.

3. Kolbenanordnung nach Anspruch 2, wobei die obere Stange innerhalb der oberen Stangenaufnahmeöffnung des Kolbenkopfes angeordnet ist.

4. Kolbenanordnung nach Anspruch 3, wobei die obere Stangenaufnahmeöffnung des Kolbenkopfes bemessen und geformt ist, um die obere Stange relativ zu dem Kolbenkopf zu fixieren.

5. Kolbenanordnung nach einem der Ansprüche 1 bis 3, ferner umfassend eine Kolbenbolzenanordnung (107), die die obere Stange mit dem Kolbenkopf koppelt.

6. Kolbenanordnung nach Anspruch 5, wobei die Kolbenbolzenanordnung zwei oder mehr Bolzensicherungen (134) und einen Kolbenbolzen (107) umfasst.

7. Kolbenanordnung nach einem der Ansprüche 1 bis 3, ferner umfassend eine Verbindungsstiftanordnung (109), die die obere Stange mit der unteren Stange koppelt.

8. Kolbenanordnung nach Anspruch 7, wobei die untere Stange einen gegabelten Abschnitt umfasst, die obere Stange einen Verbindungsabschnitt umfasst, und die Verbindungsstiftanordnung sich durch den gegabelten Abschnitt der unteren Stange und den Verbindungsabschnitt der oberen Stange erstreckt.

9. Motor, umfassend:
einen oder mehrere Zylinder (112);
eine Kurbelwelle (126);
eine oder mehrere Kolbenanordnungen (100) nach einem der Ansprüche 1 bis 8.

10. Motor nach Anspruch 9, wobei der Kolbenkopf umfasst:
eine erste Verstärkungsrippe (1002), die sich axial von einem oberen Abschnitt des Kolbenkopfes erstreckt; und
eine zweite Verstärkungsrippe (1004), die sich axial von dem oberen Abschnitt des Kolbenkopfes erstreckt, wobei die erste und zweite Verstärkungsrippe eine obere Stangenaufnahmeöffnung (1006) definieren.

11. Motor nach Anspruch 10, wobei die obere Stange innerhalb der oberen Stangenaufnahmeöffnung des Kolbenkopfes angeordnet ist, wobei die obere Stangenaufnahmeöffnung des Kolbenkopfes bemessen und geformt ist, um die obere Stange relativ zu dem Kolbenkopf zu fixieren.

12. Motor nach einem der Ansprüche 9 bis 11, ferner umfassend eine Verbindungsstiftanordnung (109), die die obere Stange mit der unteren Stange koppelt, wobei die untere Stange einen gegabelten Abschnitt umfasst, die obere Stange einen Verbindungsabschnitt umfasst, und die Verbindungsstiftanordnung sich durch den gegabelten Abschnitt der unteren Stange und den Verbindungsabschnitt der oberen Stange erstreckt.

13. Verfahren zum Bilden einer Kolbenanordnung nach einem der Ansprüche 1 bis 8, das Verfahren umfassend:
Koppeln einer oberen Stange (106) mit einem Kolbenkopf (104) an einem ersten Längsende der oberen Stange;
Fixieren einer Position der oberen Stange relativ zum Kolbenkopf, wobei der Kolbenkopf einen Kolbenschaft einschließt, und einen oder mehrere Stützflansche (2410), die sich von der oberen Stange (2406) zu einem inneren Abschnitt des Kolbenschafts erstrecken, wobei die Stützflansche (2410) im Wesentlichen verhindern, dass sich die obere Stange (2406) relativ zum Kolbenkopf (2404) dreht;
drehbares Koppeln einer unteren Stange (108) mit einem zweiten Längsende der oberen Stange; und
drehbares Koppeln der unteren Stange mit einer Kurbelwelle (126) eines Motors (102).

14. Verfahren nach Anspruch 13, wobei das Koppeln einer oberen Stange an einen Kolbenkopf das Koppeln der oberen Stange an den Kolbenkopf mit einer Kolbenbolzenanordnung (107) umfasst.

15. Verfahren nach einem der Ansprüche 13 oder 14, wobei das drehbare Koppeln einer unteren Stange an die obere Stange das Koppeln der unteren Stange an die obere Stange mit einer Verbindungsstiftanordnung (109) umfasst.

## Revendications

1. Ensemble piston, comprenant :
une tête de piston (2404) destinée à effectuer un mouvement alternatif à l'intérieur d'un cylindre d'un moteur, la tête de piston comportant une jupe de piston ;
une tige supérieure (2406) accouplée à la tête de piston au niveau d'une extrémité longitudinale de la tige supérieure et fixée par rapport à la tête de piston ; et
une tige inférieure (2408) accouplée de manière rotative à une extrémité longitudinale opposée de la tige supérieure, la tige inférieure étant conçue pour pivoter autour de l'extrémité longitudinale opposée de la tige supérieure,
dans lequel la tige inférieure est conçue pour s'accoupler à un vilebrequin (126) au niveau d'une extrémité longitudinale de la tige inférieure opposée à la tige supérieure,
**caractérisé en ce qu'une** ou plusieurs brides de support (2410) s'étendent de la tige supérieure (2406) à une partie intérieure de la jupe de piston, lesdites brides de support (2410) empêchant sensiblement la tige supérieure (2406) de tourner par rapport à la tête de piston (2404).

2. Ensemble piston selon la revendication 1, dans lequel la tête de piston comprend :
un premier gousset (1002) s'étendant de manière axiale à partir d'une partie supérieure de la tête de piston ; et
un second gousset (1004) s'étendant de manière axiale à partir de la partie supérieure de la tête de piston, les premier et second goussets définissant une ouverture supérieure de réception de tige (1006).

3. Ensemble piston selon la revendication 2, dans lequel la tige supérieure est disposée à l'intérieur de l'ouverture de réception de tige supérieure de la tête de piston.

4. Ensemble piston selon la revendication 3, dans lequel l'ouverture de réception de tige supérieure de la tête de piston est dimensionnée et façonnée pour fixer la tige supérieure par rapport à la tête de piston.

5. Ensemble piston selon l'une quelconque des revendications 1 à 3, comprenant en outre un ensemble axe de pied de bielle (107) accouplant la tige supérieure à la tête de piston.

6. Ensemble piston selon la revendication 5, dans lequel l'ensemble axe de pied de bielle comprend deux serrures à broche (134) ou plus et un axe de pied de bielle (107).

7. Ensemble piston selon l'une quelconque des revendications 1 à 3, comprenant en outre un ensemble broche de connecteur (109) accouplant la tige supérieure à la tige inférieure.

8. Ensemble piston selon la revendication 7, dans lequel la tige inférieure comprend une partie en fourche, la tige supérieure comprend une partie connecteur, et l'ensemble broche de connecteur s'étend à travers la partie en fourche de la tige inférieure et la partie de connecteur de la tige supérieure.

9. Moteur, comprenant :
un ou plusieurs cylindres (112) ;
un vilebrequin (126) ;
un ou plusieurs ensembles piston (100) selon l'une quelconque des revendications 1 à 8.

10. Moteur selon la revendication 9, dans lequel la tête de piston comprend en outre :
un premier gousset (1002) s'étendant de manière axiale à partir d'une partie supérieure de la tête de piston ; et
un second gousset (1004) s'étendant de manière axiale à partir de la partie supérieure de la tête de piston, les premier et second goussets définissant une ouverture supérieure de réception de tige (1006).

11. Moteur selon la revendication 10, dans lequel la tige supérieure est disposée à l'intérieur de l'ouverture de réception de tige supérieure de la tête de piston, dans lequel l'ouverture de réception de tige supérieure de la tête de piston est dimensionnée et façonnée pour fixer la tige supérieure par rapport à la tête de piston.

12. Moteur selon l'une quelconque des revendications 9 à 11, comprenant en outre un ensemble de broches de connecteur (109) accouplant la tige supérieure à la tige inférieure, dans lequel la tige inférieure comprend une partie en fourche, la tige supérieure comprend une partie connecteur, et l'ensemble broche de connecteur s'étend à travers la partie en fourche de la tige inférieure et la partie connecteur de la tige supérieure.

13. Procédé de formation d'une composition de verre selon l'une quelconque des revendications 1 à 8, le procédé comprenant :
l'accouplement d'une tige supérieure (106) à une tête de piston (104) au niveau d'une première extrémité longitudinale de la tige supérieure ;
la fixation d'une position de la tige supérieure par rapport à la tête de piston, dans lequel la tête de piston comporte une jupe de piston, et une ou plusieurs brides de support (2410) s'étendant de la tige supérieure (2406) à une partie intérieure de la jupe de piston, lesdites brides de support (2410) empêchant sensiblement la tige supérieure (2406) de tourner par rapport à la tête de piston (2404) ;
l'accouplement rotatif d'une tige inférieure (108) à une seconde extrémité longitudinale de la tige supérieure ; et
l'accouplement rotatif de la tige inférieure à un vilebrequin (126) d'un moteur (102).

14. Procédé selon la revendication 13, dans lequel l'accouplement d'une tige supérieure à une tête de piston comprend l'accouplement de la tige supérieure à la tête de piston à l'aide d'un ensemble axe de pied de bielle (107).

15. Procédé selon l'une quelconque des revendications 13 ou 14, dans lequel l'accouplement rotatif d'une tige inférieure à la tige supérieure comprend l'accouplement de la tige inférieure à la tige supérieure avec un ensemble de broches de connecteur (109).
